# EUROPEAN PATENT APPLICATION

(11) **EP 4 738 992 A1**
(43) Date of publication of application: **06.05.2026**
(21) Application number: 25212636.2
(22) Date of filing: 31.10.2025
(51) Int. Cl.: H05B 6/06, H02J 50/12, H02M 7/48

(54) **MODULAR AND CONFIGURABLE RESONANT INVERTER SYSTEM WITH DYNAMIC TRANSFORMER RATIO SWITCHING AND AUTOMATIC LOAD MATCHING FOR MULTI-OUTPUT INDUCTION HEATING AND WIRELESS POWER TRANSFER APPLICATIONS**

(30) Priority: 31.10.2024 US 202463714359 P
(71) Applicant: Ultraflex International, Inc., Ronkonkoma, NY 11779 (US)
(72) Inventor: METODIEV, Mario, West Islip, 11795 (US); BONEV, Stanimir, 1619 Sofia (BG)
(74) Representative: Weiser Voith Gugler Patentanwälte Partnerschaft

(57) **Abstract**

A modular resonant inverter system for induction heating or wireless power transfer, including a plurality of power inverter modules each configured to convert an input voltage into a resonant high-frequency output; a plurality of matching transformers, each transformer connected to the output of a respective module, the transformers including switchable primary and secondary windings; a distributed tank capacitor bank associated with each module, wherein the capacitors are configurable in series, parallel, or series-parallel configurations based on the connection of the modules; an electronic switching circuit coupled to the primary windings of each transformer, wherein the switching circuit adjusts the number of primary turns to modify the transformer ratio and achieve load impedance matching; and a control system configured to monitor and control the switching circuit and the tank capacitor configuration to dynamically match the impedance of the load, wherein the control system reconfigures the transformer winding ratios and capacitance values in the distributed tank capacitor bank in response to varying load conditions.

## Description

### TECHNICAL FIELD

The present invention relates to the technical field of electromagnetic energy transfer, with a particular focus on induction heating and melting systems. It also pertains to load-matching and tuning of compensation networks in wireless power transmission systems, such as those used for battery charging or energy transfer applications.

### BACKGROUND

Induction heating power supplies typically employ resonant inverter circuits to generate high-frequency electromagnetic fields. Their performance and efficiency largely depend on the ability to match the output circuit to the load conditions, which can vary significantly during operation. Such challenges include the change in electrical impedance as materials heat up, undergo phase transitions, or alter their physical properties. For example, during the heating of ferromagnetic materials, a change in impedance occurs when the material passes through its Curie point temperature, causing a significant shift in the load conditions.

Existing methods for load matching in resonant inverters rely primarily on switching the primary or secondary turns of a matching transformer or configuring capacitors in the tank circuit to achieve resonance at different frequencies. Traditionally, such adjustments are performed manually, by using electromechanical contactors or relays, or through bulky and slow pneumatic switches. These methods are not suitable for applications requiring rapid or dynamic changes to the load configuration, resulting in reduced efficiency, increased energy consumption, and potential system instability and failures.

Automatic load matching solutions have been explored but often involve complex control circuits and multiple switching devices, leading to increased system complexity, higher cost, and potential reliability concerns. Furthermore, existing solutions lack the modularity and scalability of the presented system, making them challenging to adapt for multi-load applications or to expand power levels by adding additional inverter modules.

In the field of induction heating and power conversion, resonant inverters are commonly used to generate high-frequency electromagnetic fields for efficient energy transfer. The effectiveness of these systems is highly dependent on the ability to match the impedance of the output circuit with the impedance of the load. Various methods have been developed to achieve load matching, with each having its limitations and drawbacks.

One common approach to load matching is by switching the number of primary or secondary turns in the matching transformer, thereby altering the voltage and current ratios at the transformer's output. This method is traditionally achieved using electromechanical switches, relays, or contactors, which can be manually adjusted or automatically controlled. Although effective, these methods are typically slow, prone to mechanical wear, and require substantial space for installation, making them unsuitable for applications that require quick reconfiguration or systems with limited physical space.

Another prevalent technique involves varying the capacitance of the tank circuit in the resonant inverter. This is often accomplished by configuring capacitor banks in series, parallel, or series-parallel combinations to change the overall resonant frequency of the circuit. While this method provides some flexibility in tuning the circuit to different load conditions, it is generally implemented using bulky capacitors, such as oil-filled film capacitors, which add cost and size constraints to the system.

There have been efforts to incorporate electronic switches, such as MOSFETs or IGBTs, to achieve faster switching and more precise control of load-matching components. However, such implementations often require multiple switches per transformer winding, resulting in increased circuit complexity, higher power losses, and the need for sophisticated control algorithms. Furthermore, these solutions are not inherently modular, making it difficult to scale the system or reconfigure the output circuits without significant redesign.

Moreover, existing induction heating systems typically lack flexibility in handling multiple independent load circuits simultaneously. Configurations are typically limited to a single output or require complex hardware changes to accommodate additional loads, which can be time-consuming and costly. The lack of dynamic reconfigurability restricts the application of these systems in scenarios where loads change rapidly, such as in the heating of materials that undergo phase changes or in wireless power transmission systems with varying positioning or number of receiving devices.

Therefore, there is a need for a more versatile, modular, and dynamic approach to load matching and power conversion in induction heating and similar systems. The related art does not provide a solution that can flexibly and seamlessly adjust the system's output parameters to varying load conditions without incurring the drawbacks associated with mechanical switching, bulky components, or complex control strategies.

### SUMMARY OF THE INVENTION

This invention addresses these needs set forth above by introducing a modular resonant inverter system that offers electronic switching of transformer windings, multiple output configurations and dynamic capacitance tuning, enabling superior performance, reduced system size, and enhanced scalability.

The present invention addresses these issues by introducing a modular resonant inverter system with flexible, automatic load-matching capabilities. The novel topology allows for reconfiguration of the output circuits through dynamic switching of transformer ratios and resonant capacitance using electronic switches. This results in a system that can dynamically adapt to changing load conditions, ensuring optimal power transfer and operational stability across a wide range of applications. The modular design also allows for easy power scalability and reconfiguration of output circuits in the field, providing significant advantages in versatility, efficiency, and cost-effectiveness over existing technologies.

By integrating a distributed tank capacitor bank configuration and automatic switching of transformer windings, the invention provides unmatched configurability and adaptability, reducing the need for expensive and bulky and expensive components, such as oil-filled capacitors, and enabling seamless operation with dynamically varying loads.

The present invention discloses a modular resonant inverter system which comprises multiple inverter modules (also described as Power Amplifier Modules or PAM). The system is designed for flexible configuration with multiple outputs and automatic load-matching capabilities. This is achieved through automatic switching of the primary transformer ratios or by connecting the secondary windings of each module's transformers in series, parallel, or series/parallel configurations, allowing for flexible impedance matching with varying load conditions. The switching can be performed manually by reconfiguring the outputs or automatically via electromechanical or pneumatically actuated devices.

A novel method for dynamically switching the primary windings of the output transformers is also disclosed, offering enhanced efficiency, reduced number of switching transistors, and simplified control.

Key advantages of the invention include its exceptional configuration flexibility and load-matching capability. The system can automatically disable a module by shunting (shorting) the primary winding of the module's matching transformer, thereby maintaining uninterrupted system operation in the event of a module failure. Additionally, if an extra module is added, the system can operate as an N+1 redundant configuration, providing fault tolerance and improved reliability.

Another distinctive feature is the distributed tank capacitor bank configuration. Each module's output is connected to its dedicated tank capacitor bank. When the module outputs are reconfigured, the corresponding capacitor banks are also reconnected in the appropriate configuration (series, parallel, or series/parallel). As the capacitors are sized according to the output current and voltage of each module, reconfiguring them allows for optimal performance without the need for bulky and expensive capacitors typically used in the industry, such as oil-filled capacitors. This design enables the use of compact, cost-effective dry film capacitors.

More specifically, the present invention discloses a modular resonant inverter system for induction heating or wireless power transfer, including a plurality of power inverter modules each configured to convert an input voltage into a resonant high-frequency output; a plurality of matching transformers, each transformer connected to the output of a respective module, the transformers including switchable primary and secondary windings; a distributed tank capacitor bank associated with each module, wherein the capacitors are configurable in series, parallel, or series-parallel configurations based on the connection of the modules; an electronic switching circuit coupled to the primary windings of each transformer, wherein the switching circuit adjusts the number of primary turns to modify the transformer ratio and achieve load impedance matching; and a control system configured to monitor and control the switching circuit and the tank capacitor configuration to dynamically match the impedance of the load, wherein the control system reconfigures the transformer winding ratios and capacitance values in the distributed tank capacitor bank in response to varying load conditions. The electronic switching circuit for adjusting the transformer winding ratios may include a single transistor and a series capacitor for each winding, thereby reducing the number of switching components required for each transformer. The system may further include a redundant module that is automatically enabled when one or more modules fail, wherein the redundant module is connected in parallel with the failed module's matching transformer. Additionally, the control system may use feedback from voltage, current, and phase detectors to adjust the transformer ratios and tank capacitor configurations, providing real-time impedance matching and maintaining resonance under dynamically changing load conditions.

The present invention also discloses a method for automatic load matching in a modular resonant inverter system, including the steps of providing a plurality of power amplification modules each having an associated matching transformer with switchable primary and secondary windings; connecting the outputs of the modules to a distributed tank capacitor bank that is configurable in series, parallel, or series-parallel configurations; measuring the voltage, current, and phase of the load and determining the load impedance; dynamically adjusting the primary winding turns of the matching transformers using an electronic switching circuit to modify the transformer ratio based on the measured load impedance; reconfiguring the connections of the tank capacitor banks to adjust the resonant frequency of the output circuits; and automatically matching the impedance of the system to the impedance of the load based on real-time load measurements and system parameters. The control system can dynamically adjust the configuration of the tank capacitor banks to alter the resonant frequency of the system, ensuring optimal power transfer efficiency at different operating frequencies. The reconfiguration of the modules and capacitor banks may be achieved through a combination of electronic switching circuits and relays, allowing for high-speed reconfiguration without the need for mechanical contactors or pneumatic switches.

The present invention also discloses a modular resonant inverter system including a plurality of modules, each connected to a matching transformer and a distributed tank capacitor bank; a set of electronic switches configured to interconnect the primary and secondary windings of the matching transformers in series, parallel, or series-parallel configurations; a control system that monitors the operating parameters of each module and automatically reconfigures the connections of the modules and capacitor banks based on the required output configuration and load conditions; wherein the control system further comprises a failure detection mechanism that isolates a failed module by shorting the primary winding of the associated matching transformer, allowing the remaining modules to continue operating without interruption. The modules may be configured to be powered by either AC or DC sources, with the system capable of operating with 1-phase, 3-phase AC, or DC input voltages. The system may further include a user interface that displays real-time operating parameters of each module and allows manual override of the automatic load matching and configuration settings.

The described features provide unprecedented flexibility in configuring the system for multiple outputs, scaling power by adding additional modules and reconfiguring existing systems on-site to adapt to changing operational requirements.

### BRIEF DESCRIPTION OF THE DRAWINGS

Fig. 1 illustrates a system configuration comprised of 6 power inverter modules, configured as 2 separate system outputs. Output 1 (load coil 1) is configured with 4 power inverter modules with transformer secondaries connected in series and Output 2 is configured with two power inverter modules with secondaries connected in parallel.
Fig. 2 is an electrical block diagram of an alternative embodiment where system module outputs are connected in series output configuration to an output load coil.
Fig. 3 is an electrical block diagram of an alternate embodiment where system module outputs are connected in parallel output configuration to an output load coil.
Fig. 4 shows another alternative embodiment of the output configuration where system module outputs are connected in series/parallel configuration into one output load coil.
Fig. 5 illustrates an embodiment where two system module outputs are connected to two windings of a dual-primary transformer, where the secondaries are connected in series to the load coil.
Fig. 6 illustrates an embodiment of the internal electrical diagram of a power inverter module, where the input voltage is supplied by an AC source.
Fig. 7 illustrates an embodiment of the internal electrical diagram of a power inverter module, wherein the input voltage is supplied by a DC source.
Fig. 8 illustrates an electrical diagram of the an embodiment of electronic switching circuit coupled to two primary windings of a transformer.
Fig. 9 illustrates a system with multiple system modules configured as a single output system connected to multiple load coils.
Fig. 10 illustrates an electrical diagram of output configurations based on three different output impedance configurations as shown in Fig. 11.
Fig. 11 is a table of switch positions and phase of the power inverter modules of Fig. 10 depending on output impendences.
Fig. 12 is a block diagram showing a portion of an exemplary device in the form of a computing system that performs methods of the control system according to one or more embodiments.

### DETAILED DESCRIPTION OF THE INVENTION

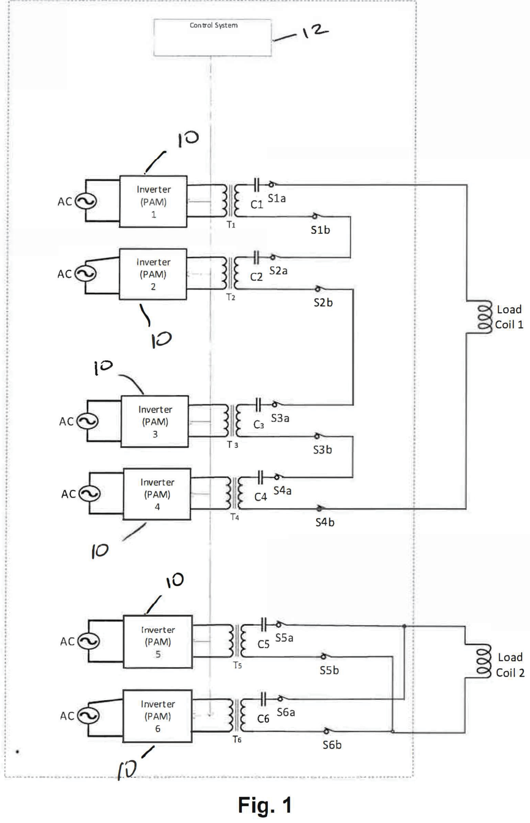

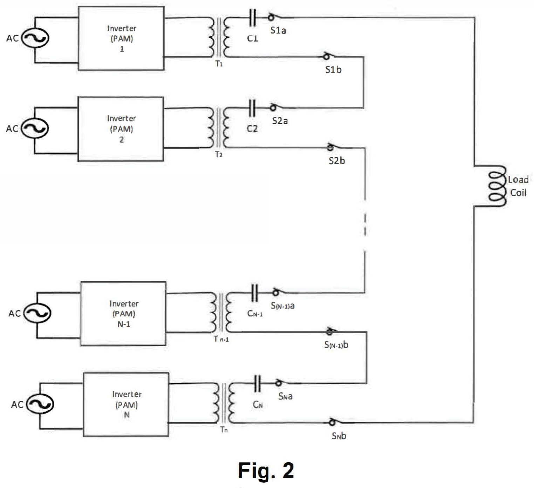

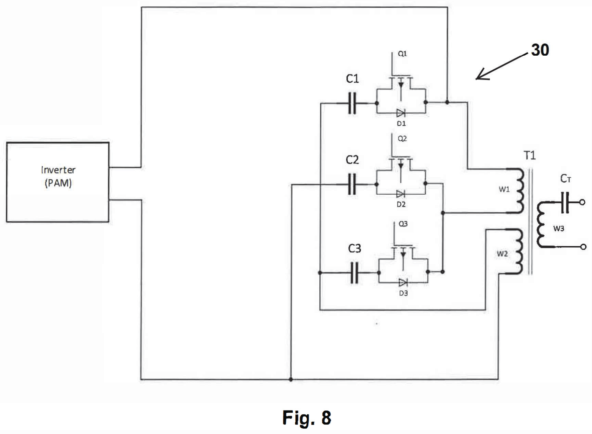

Referring now to the invention in more detail, Fig. 1 illustrates an embodiment of a modular inverter with six (PAM 1-PAM 6) power amplifier modules 10 configured in two outputs (load coil 1 and load coil 2). The number of modules 10 can vary from 1 to many (N), but a system typically is comprised of 4 to 32 modules. The number of outputs can also vary and is typically from 1 to 8. Each of the outputs can be configured to have a different power level or resonant frequency wherein may be determined by the load inductance and the total distributed tank capacitance of the circuit. Depending on the needs of the user, these systems can be also easily reconfigured in the field, by reconnecting or adding modules and capacitor banks. The reconfiguring can be achieved by either manual re-connection of the output terminals as shown in Fig. 2 through Fig. 4, or automatic switching of the primary windings as shown in Fig. 8.

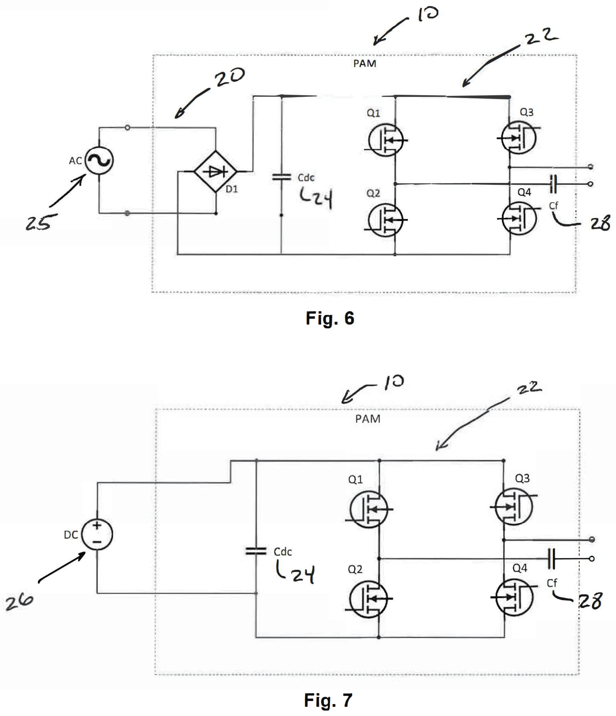

Two basic circuits of modules 10 are shown in Fig. 6 and Fig. 7. As shown in Fig. 6, each module (PAM) 10 consists of an AC to DC rectifier circuit 20 including D1 and an H-bridge inverter circuit 22, using power semiconductor switches Q1, Q2, Q3 and Q4 such as MOSFETs or IGBTs. The AC to DC rectifier circuit 20 and H-bridge inverter circuit 22 are separated by DC link capacitors (Cdc) 24. The modules 10 can be supplied by a 1-phase or 3-phase AC power source 25, or a DC power source 26. If a DC power source is used, the rectifier circuit in the module is not needed, as shown in Fig 7.

As shown for example in Figs. 1-5, a matching transformer e.g., T1 in Fig. 1 is connected to the output of each inverter module e.g., PAM 1. The transformer is also used for galvanic isolation of the output as well as combining the output voltages and currents of the individual inverter circuits. The circuit of the inverter module may or may not include DC blocking capacitor (Cf) 28.

The transformer may have one or multiple switchable primary and/or secondary windings. Fig. 8 depicts a transformer T1 with two switchable primary windings W1, W2.

One embodiment of the invention is the load matching and tuning that can be achieved by configuring the outputs in series, where the output voltages of each inverter module add up and the current remains the same, or in parallel, where the output currents of each inverter add up and the voltage stays the same, or a combination of both, where both output voltage and current can be derived by the type of the configuration, as shown in Figs. 2-5. Alternatively, the load matching and tuning can be achieved by automatically switching the number of turns in the primary windings of the transformers, thus changing the transformer ratio and the voltage and current at the secondary W3 of the transformer, as shown in Fig. 8. Furthermore, a combination of both methods noted above may be used for achieving load matching and tuning.

Another embodiment is the frequency tuning and matching of the output circuit that can be achieved by changing the capacitance in the primary winding of the transformer, by turning on and off the electronic switches, which affects the reflected capacitance of the output of the transformer. Alternatively, frequency turning and matching of the output circuit may be achieved by changing the equivalent tank capacitance in the output of the circuit, by reconfiguring the output connections, as shown in Figs. 2-4. Furthermore, a combination of the two methods described above may be used to achieve frequency tuning and matching of the output circuit.

Another embodiment is the switching of the primary windings by transistor devices. Fig. 8 shows an electrical diagram of switchable primary windings using a semiconductor switches Q1, Q2, Q3 in a unique configuration with series-connected capacitors C1, C2, C3. The typical realization of such a circuit is done with two transistors per transformer winding. The current invention discloses a method of switching the primary windings by using one transistor or semiconductor switch and one capacitor connected in series.

As shown in Fig. 1, the system can be composed of multiple inverter modules 10 (PAM1-PAM4), each coupled with an independent matching transformer T1-T4 and a distributed tank capacitor bank including capacitors C1-C4, and switches S1a-S4a and S1b-S4b with respect to the load coil 1 and module 10 (PAM 5 and PAM 6) each coupled with an independent matching transformer T5 and T6 and a distributor tank capacitor bank C5-C6 and switches S5a, S6a, S5b and S6b with respect to load coil 2. This modular architecture allows for seamless reconfiguration of the system to accommodate a wide range of operating conditions and power levels. Depending on the desired configuration, the outputs of the system modules can be connected in series, parallel, or a combination of both, enabling the system to achieve flexible impedance matching and optimized power transfer efficiency.

As shown in Fig. 8, each system module may include an integrated electronic switching circuit 30 that controls the primary windings W1, W2 of the matching transformer T1. The switching circuit 30 uses a single transistor (Q1, Q2, Q3) and a series capacitor (C1, C2, C3) to dynamically adjust the number of primary turns, thereby modifying the transformer ratio in real-time. This approach reduces the complexity and cost of the system by minimizing the number of switching components required for each transformer. The result is a highly efficient and responsive load-matching mechanism that can adapt to sudden changes in load impedance without the delays associated with traditional electromechanical switches or relays.

In one embodiment, as shown in Fig. 1, the system includes a control system 12 that monitors the voltage, current, and phase of the load using precision sensors. Based on the real-time measurements, the control system 12 dynamically reconfigures the output circuits of the system module and adjusts the associated distributed tank capacitance. This capability allows the system to maintain resonance and optimal power transfer even as the load characteristics change. For example, when heating ferromagnetic materials, the impedance of the load changes significantly as the material passes through its Curie temperature.

Another advantage of the present invention is its ability to support multiple independent outputs. As shown in Fig. 2, each system module can be configured to drive a separate load coil, with the system automatically adjusting the power and frequency of each output to match the specific impedance of each load. This feature is particularly beneficial in applications where multiple heating coils or charging pads are used simultaneously, allowing for independent control and load matching of each output.

Fig. 2 illustrates a system module having up to N power inverter modules 10 (PAM 1-PAM N) associated with transformers T1-TN. The outputs on the secondary windings of each of the transformers is connected to a distributed tank capacitor bank including capacitors C1-CN and switches S1a-SNa and S1b-SNb wherein the capacitors are connected in series with respect to the load coil.

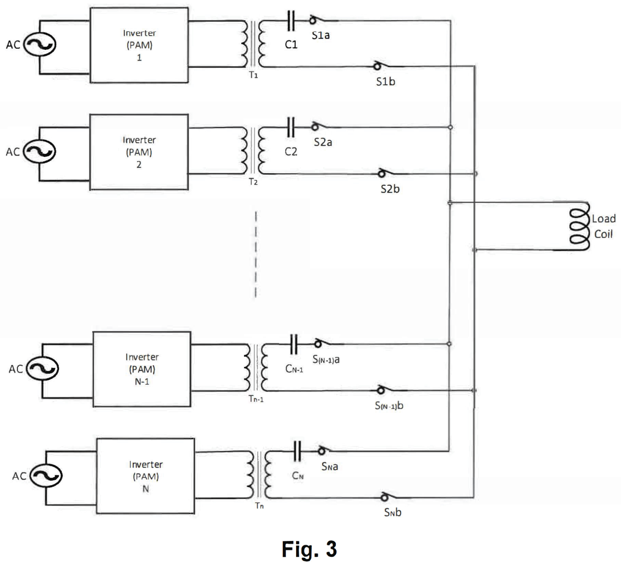

Fig. 3 illustrates a system module having up to N power inverter modules 10 (PAM 1-PAM N) associated with transformers T1-TN. The outputs on the secondary windings of each of the transistors is connected to a distributed tank capacitor bank including capacitors C1-CN and switches S1a-SNa and S1b-SNb wherein the capacitors are connected in parallel with respect to the load coil.

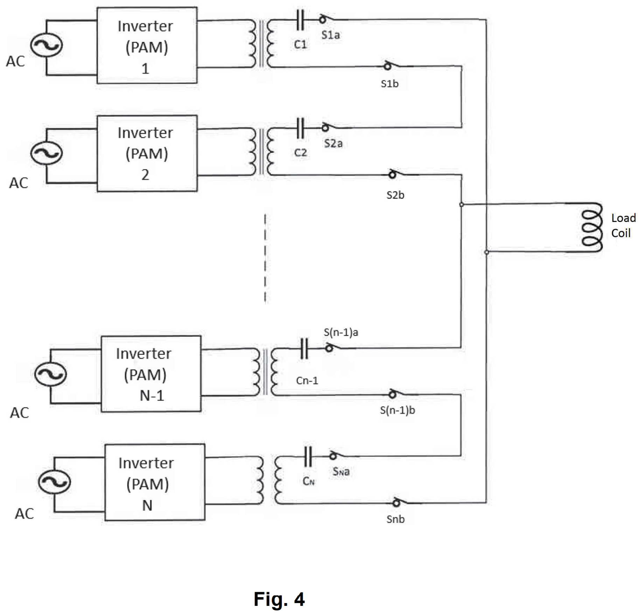

Fig. 4 illustrates a system module having up to N power inverter modules 10 (PAM 1-PAM N) associated with transformers T1-TN. The outputs on the secondary windings of each of the transformers is connected to a distributed tank capacitor bank including capacitors C1-CN and switches S1a-SNa and S1b-SNb wherein the capacitors are connected in a series/parallel configuration with respect to the load coil.

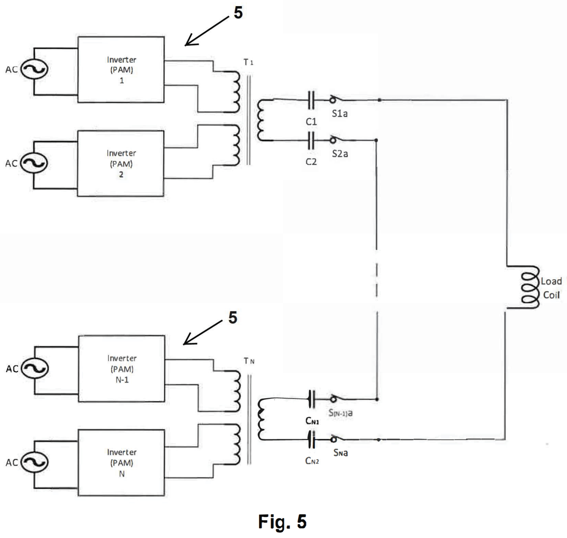

Fig. 5 illustrates an embodiment having two system module outputs 5 connected to two windings of a dual-primary transformers wherein the transformer secondary are connected in series to load coil. More specifically, Fig. 5 illustrates a system being at least two system modules 5 wherein the first system module includes two power inverter modules (PAM 1 and PAM 2), such that PAM 1 is coupled to a first winding of transformer T1 and PAM 2 is coupled to a second winding of T1. At least a second system module includes two power inverter modules (PAM N-1 and PAM N), such that PAM N-1 is coupled to a first winding of transformer TN and PAM N is coupled to a second winding of transformer TN. The transformer secondary of T1 and TN are connected to a respective distributed tank capacitor. The first distributed tank capacitor includes capacitors C1 and C2 and switches S1a and S2a and the second distributed tank capacitors includes capacitors CN1 and CN2 and switches S(N-1) and SNa, wherein the first and second distributed tank capacitors are connected in series to the single load coil.

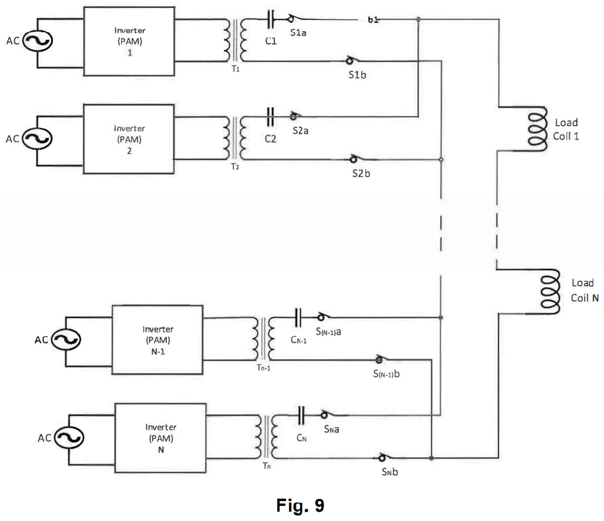

Fig. 9 illustrates a system including a plurality of system modules each configured as a single output converter to a plurality of load coils. As shown in Fig. 9, a first system module includes two power inverter modules PAM 1 and PAM 2 coupled to the primary windings of transformers T1 and T2, respectively. The secondary windings are coupled to respective distributed tank capacitor banks (C1 and C2, respectively) and coupled to an output load coil 1. A plurality of such system modules includes power inverter modules up to PAM N-1 and PAM N having an output to load coil N so that each system module of the plurality of modules has an associated output load coil.

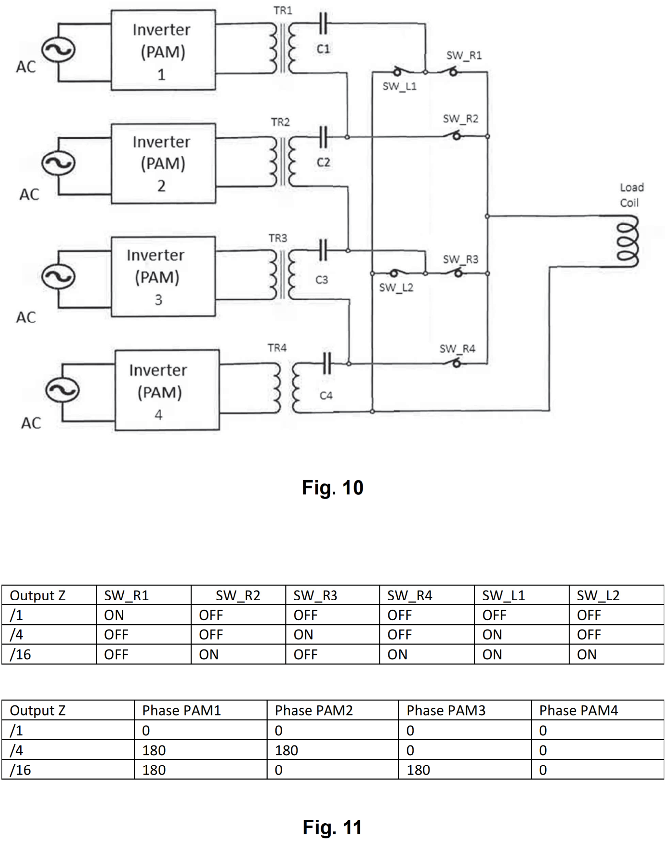

Fig. 10 illustrates a further embodiment of the invention having AC power sources coupled to power inverter modules PAM 1 and PAM 4, each coupled to an independent matching transformer TR1 to TR4 and a distributed tank capacitor bank including capacitors C1-C4, and switches R1-R4 and L1 and L2 coupled to a load coil. Depending on the output impedance, the switches are turned on/off to optimize system performance as shown in the table of Fig. 11 illustrating switch position and associated phase angle of each power inverter PAM 1 - PAM 4 depending on the switch position and the output impedance Z. Fig11 Tables 1 and 2 show the corresponding switch states and the control signals phase of the power amplifiers for different output impedances. With four power amplifiers operating at maximum power, three different output impedance configurations are possible. In the first configuration, denoted as "/1," all modules are connected in series. In the second configuration, denoted as "/4," the modules are arranged in pairs connected in parallel, with each pair then connected in series. In this arrangement, the equivalent output impedance is four times lower than that of the fully series-connected configuration. In the third configuration, denoted as "/16," all modules are connected in parallel, resulting in an output impedance sixteen times lower than that of the series configuration. The maximum number of impedance transformation ratios at constant power is achieved when the number of modules is a multiple of the first N prime numbers.

The distributed tank capacitor bank configuration further enhances the flexibility of the system. Each module's transformer output is connected to its own capacitor bank, and the capacitance of these banks can be dynamically reconfigured to suit the output configuration. For instance, when the modules are connected in parallel, the individual capacitances add up, providing a higher overall capacitance. Conversely, when the modules are connected in series, the capacitances are combined to provide a lower equivalent capacitance.

The present invention also incorporates fault tolerance and redundancy mechanisms to ensure uninterrupted operation. By way of example only, if a module fails, the control system 12 can isolate the failed module by shorting the primary winding of the associated transformer. This prevents the failed module from affecting the rest of the system and allows the remaining modules to continue operating. If a redundant module is available, it can be automatically integrated into the system to replace the failed module, providing N+1 redundancy for critical applications.

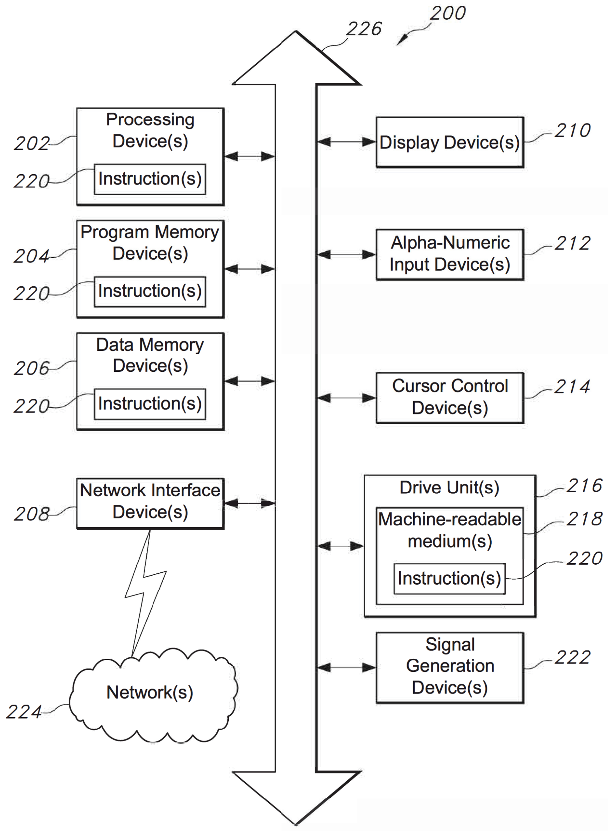

As illustrated in Fig. 12, the control system 12 that monitors the voltage current and phase of the load using precision sensors may also include a computer system 200 having a processor 202, e.g., a central processing module (CPU), a graphics-processing module (GPU), or both. Moreover, the computer system 200 may include a main memory 204 and a static memory 206 that can communicate with each other via a bus 226. As shown, the computer system 200 may further include a video display device 210, such as a liquid crystal display (LCD), an organic light emitting diode (OLED), a flat panel display, a solid state display, or a cathode ray tube (CRT). Additionally, the computer system 200 may include an input device 212, such as a keyboard, and a cursor control device 214, such as a mouse. The computer system 200 can also include a disk drive device 216, a signal generation device 222, such as a speaker or remote control, and a network interface device 208.

In a particular embodiment or aspect, as depicted in Fig. 12, the disk drive device 216 may include a computer-readable medium 218 in which one or more sets of instructions 220, e.g., software, can be embedded. Further, the instructions 220 may embody one or more of the methods or logic as described herein. In a particular embodiment or aspect, the instructions 220 may reside completely, or at least partially, within the main memory 204, the static memory 206, and/or within the processing device 202 during execution by the computer system 200. The main memory 204 and the processing device 202 also may include computer-readable media.

In an alternative embodiment or aspect, dedicated hardware implementations, such as application specific integrated circuits, programmable logic arrays and other hardware devices, can be constructed to implement one or more of the methods described herein. Applications that may include the apparatus and systems of various embodiments or aspects can broadly include a variety of electronic and computer systems. One or more embodiments or aspects described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

In accordance with various embodiments or aspects, the methods described herein may be implemented by software programs tangibly embodied in a processor-readable medium and may be executed by a processing device. Further, in an exemplary, non-limited embodiment or aspect, implementations can include distributed processing, component/object distributed processing, and parallel processing. Alternatively, virtual computer system processing can be constructed to implement one or more of the methods or functionality as described herein.

**It** is also contemplated that a computer-readable medium includes instructions 220 or receives and executes instructions 220 responsive to a propagated signal, so that a device connected to a network 224 can communicate voice, video or data over the network 224. Further, the instructions 220 may be transmitted or received over the network 224 via the network interface device 208.

While the computer-readable medium is shown to be a single medium, the term "computer-readable medium" includes a single medium or multiple media, such as a centralized or distributed database, and/or associated caches and servers that store one or more sets of instructions. The term "computer-readable medium" shall also include any medium that is capable of storing, encoding or carrying a set of instructions for execution by a processing device or that cause a computer system to perform any one or more of the methods or operations disclosed herein.

In a particular non-limiting example, embodiment or aspect, the computer-readable medium can include a solid-state memory, such as a memory card or other package, which houses one or more non-volatile read-only memories. Further, the computer-readable medium can be a random access memory or other volatile re-writable memory. Additionally, the computer-readable medium can include a magneto-optical or optical medium, such as a disk or tapes or other storage device to capture carrier wave signals, such as a signal communicated over a transmission medium. A digital file attachment to an e-mail or other self-contained information archive or set of archives may be considered a distribution medium that is equivalent to a tangible storage medium. Accordingly, any one or more of a computer-readable medium or a distribution medium and other equivalents and successor media, in which data or instructions may be stored, are included herein.

In accordance with various embodiments or aspects, the methods described herein may be implemented as one or more software programs running on a computer processing device. Dedicated hardware implementations including, but not limited to, application specific integrated circuits, programmable logic arrays, and other hardware devices can likewise be constructed to implement the methods described herein. Furthermore, alternative software implementations including, but not limited to, distributed processing or component/object distributed processing, parallel processing, or virtual machine processing can also be constructed to implement the methods described herein.

**It** should also be noted that software that implements the disclosed methods may optionally be stored on a tangible storage medium, such as: a magnetic medium, such as a disk or tape; a magneto-optical or optical medium, such as a disk; or a solid state medium, such as a memory card or other package that houses one or more read-only (non-volatile) memories, random access memories, or other re-writable (volatile) memories. The software may also utilize a signal containing computer instructions. A digital file attachment to e-mail or other self-contained information archive or set of archives is considered a distribution medium equivalent to a tangible storage medium. Accordingly, a tangible storage medium or distribution medium as listed herein, and other equivalents and successor media, in which the software implementations herein may be stored, are included herein.

Although the present specification describes components and functions implemented in the embodiments with reference to particular standards and protocols, the disclosed embodiment is not limited to such standards and protocols.

In accordance with various embodiments, the methods, functions or logic described herein may be implemented as one or more software programs running on a computer processor. Dedicated hardware implementations including, but not limited to, application specific integrated circuits, programmable logic arrays and other hardware devices can likewise be constructed to implement the methods described herein. Furthermore, alternative software implementations including, but not limited to, distributed processing or component/object distributed processing, parallel processing, or virtual machine processing can also be constructed to implement the methods, functions or logic described herein.

Although specific example embodiments have been described, it will be evident that various modifications and changes may be made to these embodiments without departing from the broader scope of the inventive subject matter described herein. Accordingly, the specification and drawings are to be regarded in an illustrative rather than a restrictive sense. The accompanying drawings that form a part hereof, show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

Although preferred embodiments have been described herein with reference to the accompanying drawings, it is to be understood that the disclosure is not limited to those precise embodiments and that various other changes and modifications may be affected herein by one skilled in the art without departing from the scope or spirit of the embodiments, and that it is intended to claim all such changes and modifications that fall within the scope of this disclosure.

In summary, the present invention provides a robust, scalable, and highly configurable power supply solution for induction heating and wireless power transfer applications. Its modular design, combined with dynamic load matching and reconfiguration capabilities, offers significant advantages in terms of flexibility, efficiency, and cost-effectiveness. The system's ability to automatically adjust transformer ratios and capacitance values in real-time ensures optimal performance across a wide range of operating conditions, making it an ideal solution for modern high-performance power supply systems.

While the foregoing written description of the invention enables one of ordinary skill to make and use the disclosed invention, those of ordinary skill will understand and appreciate the existence of variations, combinations, and equivalents of the specific embodiment, method, and examples herein. The invention should therefore not be limited by the above-described embodiments, methods, and examples, but by all embodiments and methods within the scope and spirit of the invention.

## Claims

1. A modular resonant inverter system for induction heating or wireless power transfer, comprising:
a plurality of power inverter modules each configured to convert an input voltage into a resonant high-frequency output;
a plurality of matching transformers, each transformer connected to the output of a respective power inverter module, the transformers comprising switchable primary and secondary windings;
a distributed tank capacitor bank associated with each power inverter module, wherein the capacitors are configurable in series, parallel, or series-parallel configurations based on the connection of the power inverter modules;
an electronic switching circuit coupled to the primary windings of each transformer, wherein the switching circuit adjusts the number of primary turns to modify the transformer ratio to match load impedance; and
a control system configured to monitor and control the switching circuit and the tank capacitor configuration to dynamically match the impedance of the load, wherein the control system reconfigures the transformer winding ratios and capacitance values in the distributed tank capacitor bank in response to varying load conditions.

2. The system of Claim 1, wherein the electronic switching circuit for adjusting the transformer winding ratios comprises a single transistor and a series capacitor for each winding, thereby reducing the number of switching components required for each transformer.

3. The system of Claim 1, further comprising at least one redundant power inverter module that is automatically enabled by the control system when one or more modules fail, wherein the at least one redundant module is connected in parallel with the failed module's matching transformer.

4. The system of Claim 1, wherein the control system uses feedback from voltage, current, and phase detectors to adjust the transformer ratios and tank capacitor configurations, providing real-time impedance matching and maintaining resonance under dynamically changing load conditions.

5. A method for automatic load matching in a modular resonant inverter system, comprising:
providing a plurality of power amplification modules each having an associated matching transformer with switchable primary and secondary windings;
connecting the outputs of the power amplification modules to a distributed tank capacitor bank that is configurable in series, parallel, or series-parallel configurations;
measuring the voltage, current, and phase of the load and determining the load impedance;
dynamically adjusting the primary winding turns of the matching transformers using an electronic switching circuit to modify the transformer ratio based on the measured load impedance;
reconfiguring the connections of the tank capacitor banks to adjust the resonant frequency of the output circuits; and
automatically matching the impedance of the system to the impedance of the load based on the measured voltage, current and phase of the load and load impedance.

6. The method of Claim 5, wherein the control system dynamically adjusts the configuration of the tank capacitor banks to alter the resonant frequency of the output, ensuring optimal power transfer efficiency at different operating frequencies.

7. The method of Claim 5, wherein the reconfiguration of the power inverter modules and capacitor banks is achieved through a combination of electronic switching circuits and relays, allowing for high-speed reconfiguration without the need for mechanical contactors or pneumatic switches.

8. A modular resonant inverter system comprising:
a plurality of modules, each connected to a matching transformer and a distributed tank capacitor bank;
a set of electronic switches configured to interconnect the primary and secondary windings of the matching transformers in series, parallel, or series-parallel configurations;
a control system that monitors the operating parameters of each module and automatically reconfigures the connections of the modules and capacitor banks based on load conditions;
wherein the control system further comprises a failure detector that isolates a failed module by shorting the primary winding of the associated matching transformer, allowing the remaining modules to continue operating without interruption.

9. The system of Claim 8, wherein the modules are configured to be powered by either AC or DC sources, with the system capable of operating with a 1-phase or 3-phase AC power source, or a DC input power source.

10. The system of Claim 8, further comprising a user interface that displays real-time operating parameters of each module and allows manual override of the automatic load matching and configuration settings.
